Europäisches Patentamt

European Patent Office

Office européen des brevets

(11) Veröffentlichungsnummer: **0 346 705**
**A1**

## (12) EUROPÄISCHE PATENTANMELDUNG

(21) Anmeldenummer: 89110086.9

(22) Anmeldetag: 03.06.89

(51) Int. Cl.⁴: **A23L 1/035 , A23L 1/314**

(30) Priorität: 11.06.88 DE 3819926

(43) Veröffentlichungstag der Anmeldung:
**20.12.89 Patentblatt 89/51**

(84) Benannte Vertragsstaaten:
**AT BE CH DE ES FR GB GR IT LI NL SE**

(71) Anmelder: **Chemische Fabrik Grünau GmbH**
**Robert-Hansen-Strasse 1**
**D-7918 Illertissen(DE)**

(72) Erfinder: **Adams, Wolfgang**
**Hölderlinstrasse 19**
**D-7987 Weingarten(DE)**
Erfinder: **Gölitz, Hartmut**
**Wiesenstrasse 15**
**D-8941 Wolfertschwenden(DE)**
Erfinder: **Sander, Andreas, Dr.**
**Karlsbaderstrasse 19**
**D-7918 Illertissen(DE)**

(54) **Verfahren zur Verbesserung des Fliessverhaltens von zum Verklumpen neigenden Pulvermischungen.**

(57) Das Fließverhalten von zum Verklumpen neigenden Pulvermischungen, die Lebensmittelemulgatoren auf Basis von Fettderivaten, Fette oder fetthaltige Lebensmittel enthalten, wird durch Vermischung und/oder Vermahlung mit Magnesiumhydroxidcarbonat verbessert.

EP 0 346 705 A1

## Verfahren zur Verbesserung des Fließverhaltens von zum Verklumpen neigenden Pulvermischungen

Die Erfindung betrifft ein Verfahren sowie die Verwendung von Magnesiumhydroxidcarbonat zur Verbesserung des Fließverhaltens von zum Verklumpen neigenden Pulvermischungen enthaltend Lebensmittelemulgatoren auf Basis von Fettderivaten, Fette oder fetthaltige Lebensmittel.

Aus dem Chemical Abstract CA 93, 97 810 v (1980) ist bekannt, daß nicht verklumpendes Natriumchlorid durch Zusatz von Magnesium-oder Calciumchlorid in Kombination mit Natriumsilikat erhalten werden kann.

Das in dem Derwent-Referat C 78-A 07 707 zitierte japanische Schutzrecht JP 77/50 260 betrifft freifließende Lecithinpulver. Dieser werden hergestellt, indem Lecithin in Essigsäure gelöst wird und anschließend zu dieser Mischung unter starkem Rühren Natrium-, Kalium-, Magnesium- oder Calciumsalze von Carbonaten, Dicarbonaten oder Hydroxiden gegeben werden.

Des weiteren ist aus dem Derwent-Referat C 85-028 265 bekannt, daß das Verklumpen von pulverförmigen Nahrungsmitteln durch Zusatz von Anticaking-Mitteln, die feste Fette mit Schmelzpunkten zwischen 35 und 80 °C und feingepulverte wasserunlösliche Substan zen enthalten, verhindert werden kann. Als wasserunlösliche Substanzen werden unter anderem Calciumphosphat, Magnesiumcarbonat, Calciumcarbonat, Calciumlactat, Calciumsilikat und Magnesiumstearat genannt.

In der Nahrungsmittelindustrie spielen Emulgatoren aufgrund ihrer vielseitigen Wirkungsweise eine bedeutende Rolle. So vereinfachen sie beispielsweise den Produktionsablauf, verbessern die Qualität von Lebensmitteln und gleichen Qualitätsunterschiede bei Rohstoffen aus. Da die Wirksamkeit von Lebensmittelemulgatoren um so besser ist, je feiner und homogener ihre Verteilung in der Nahrungsmittelmasse ist, werden in vielen Fällen pulverförmige Emulgatoren eingesetzt. Die feinverteilte Form solcher Emulgatoren kann durch Sprühkristallisation oder wie in DE 32 12 057 beschrieben durch Sprühtrocknung erreicht werden. Überwiegend jedoch wird die Pulverform durch Vermahlung erreicht.

Mono- und/oder Diglyceride von Speisefettsäuren, verestert mit Diacetylweinsäure (im Englischen üblicherweise mit Datem abgekürzt) sind wichtige Emulgatoren für Lebensmittel, die in Abhängigkeit von den eingesetzten Mono- und/oder Diglyceriden flüssig, pastös oder wachsartig fest sind, s. "Emulgatoren als Zusatzstoffe für Lebensmittel" in Zeitschrift für Lebensmittel-Technologie und Verfahrenstechnik 31(6), 265 - 271(1980). Wachsartige Datem in Pulverform werden beispielsweise in pulverförmigen Backmitteln oder Fertigmehlen eingesetzt. Die Pulverform dieser wachsartigen Emulgatoren wird überwiegend durch Vermahlung erreicht. Da wachsartige Mono- und/oder Diglyceride von Speisefettsäuren verestert mit Diacetylweinsäure aufgrund ihrer niedrigen Schmelzpunkte zwischen 40 und 55 °C zum Verkleben und/oder Verklumpen neigen, wird die Vermahlung in Gegenwart von Mahl- und/oder Freifließmitteln durchgeführt. Diese Zusätze sollen bewirken, daß die erhaltenen Pulvermischungen während der Lagerung freifiießend bleiben.

Für zum Verklumpen neigende Pulvermischungen, die Emulgatoren, Fette oder Lebensmittelzubereitungen enthalten, wird üblicherweise Tricalciumphosphat als Mahl- und/oder Freifließmittel verwendet. Die Vermahlung mit Tricalciumphosphat wird in an sich bekannter Weise durchgeführt, in dem beispielsweise schuppenförmige oder in Pastillen vorliegende Datem mit Tricalciumphosphat gemischt, über Fördereinrichtungen in einem offenen oder geschlossenen System einer geeigneten Mühle zugeführt und zu einem feinen Pulver vermahlen wird. Die erhaltene Pulvermischung wird einem Nachmischprozeß unterworfen und kann dann mit anderen pulverförmigen Backmittelbestandteilen oder Fertigmehlbestandteilen vermischt werden.

Tricalciumphosphat hat jedoch als Mahl- und/oder Freifließmittel nur eine begrenzte Wirksamkeit. Um bei einer Kühllagerung zwischen 12 und 18 °C ausreichende Freifließeigenschaften zu erzielen, sind beispielsweise in Datem/Tricalciumphosphat-Mischungen mindestens 20 Gew.-%, bezogen auf die Gesamtmischung, an Tricalciumphosphat notwendig. Des weiteren führen tricalciumphosphathaltige Mischungen verhältnismäßig schnell zu einer Belegung der Aggregate von Förderelementen und der Mühle, so daß eine häufige Reinigung der Fördereinrichtungen und der Mühle erforderlich ist.

Aus diesen und aus ernährungsphysiologischen Gründen hat man seit mehreren Jahren versucht, Tricalciumphoshat durch organische Materialien, beispielsweise Zucker, Magermilchpulver, Molkenpulver, Sojaproteine, Stärken und Maltodextrinen zu ersetzen (DE 32 12 057). Die Freifleißeigenschaften solcher Pulver sind jedoch ebenfalls nicht zufriedenstellend. Darüber hinaus führen die Bestandteile solcher Mischungen während der Vermahlung ebenfalls zu Verschmierungen auf den Förderelementen sowie in der Mühle.

Auch mit Calciumsalzen, beispielsweise Calciumcarbonat oder Calciumacetat, als Mahl- und/oder Freifließmittel kann weder das Mahlverhalten (Belegung von Förderelementen und Mühle) noch das Fließverhalten der erhaltenen Pulvermischungen verbessert werden.

Somit bestand die Aufgabe der Erfindung darin, des Fließverhalten von zum Verklumpen neigenden Pulvermischungen enthaltend Lebensmittelemulgatoren auf Basis von Fettderivaten, Fette oder fetthaltige Lebensmittel zu verbessern.

Überraschenderweise wurde gefunden, daß Lebensmittelemulgatoren auf Basis von Fettderivaten, Fettpulver und/oder zum Verklumpen neigende fetthaltige Lebensmittel, die mit Magnesiumhydroxidcarbonat vermischt und/oder vermahlen wurden, deutlich verbesserte Fließeigenschaften besitzen.

Gegenstand der Erfindung ist dementsprechend ein Verfahren zur Verbesserung des Fließverhaltens von zum Verklumpen neigenden Pulvermischungen enthaltend Lebensmittelemulgatoren auf Basis von Fettderivaten, Fette oder fetthaltige Lebensmittel, welches dadurch gekennzeichnet ist, daß diese Pulvermischungen mit Magnesiumhydroxidcarbonat vermischt und/oder vermahlen werden.

Weiterer Erfindungsgegenstand ist die Verwendung von Magnesiumhydroxidcarbonat zur Verbesserung des Fließverhaltens von zum Verklumpen neigenden Pulvermischungen enthaltend Lebensmittelemulgatoren auf Basis von Fettderivaten, Fette oder fetthaltige Lebensmittel.

Die nach dem erfindungsgemäßen Verfahren herstellbaren Pulvermischungen zeichnen sich durch deutlich verbesserte Fließeigenschaften aus. Es tritt weder Pastenbildung ein noch besteht Gefahr, das die Pulver verklumpen oder zusammenbacken. Selbst bei Temperaturen zwischen 20 und 30 °C und Drucken zwischen 1 und 3t/m² über einen längeren Zeitraum, beispielsweise 6 - 12 Monate, bleiben solche Mischungen freifließend. Pulvermischungen aus Emulgatoren, beispielsweise Mono- und/oder Diglyceriden von Speisefettsäuren verestert mit Diacetylweinsäure (Datem), und Magnesiumhydroxidcarbonat, die nur 15 Gew.-%, bezogen auf die Gesamtmischung, an Magnesiumhydroxidcarbonat enthalten, besitzen so gute Fließeigenschaften, das sich eine Kühllagerung bei Temperaturen zwischen 12 und 18 °C in vielen Fällen erübrigt. Eine Belegung der Förderelemente und der Mühle findet bei Verwendung dieses Magnesiumsalzes als Mahl- und/oder Freifließmittel nur in geringem Umfang statt, so daß aufgrund eines geringeren Reinigungsaufwandes insgesamt eine höhere Stundenleistung bei der Herstellung von Pulvermischungen erreicht wird.

Beispiele für Lebensmittelemulgatoren auf Basis von Fettderivaten, die nach dem erfindungsgemäßen Verfahren in Pulvermischungen mit deutlich verbessertem Fließverhalten überführt werden können, sind Mono- und/oder Diglyceride von Speisefettsäuren, Mono- und/oder Diglyceride von Speisefettsäuren, verestert mit organischen Säuren sowie Sorbitanfettsäureester. Mono- und/oder Diglyceride von Speisefettsäuren werden durch Direktveresterung von Glyceriden mit natürlichen, gesättigten Fettsäuren mit 12 bis 20 C-Atomen, vorzugsweise mit 16 bis 18 C-Atomen, beispielsweise gehärteten Talgfettsäuren hergestellt. Mono- und/oder Diglyceride von Speisefettsäuren, verestert mit organischen Säuren, beispielsweise Essigsäure, Milchsäure, Monoacetylweinsäure, Diacetylweinsäure und/oder Bernsteinsäure, sind eine weitere wichtige Emulgatorgruppe. Diese sind in an sich bekannter Weise durch Veresterung von Glycerin mit Fettsäuren und Carbonsäuren oder durch Umsetzung von Mono- und/oder Diglyceriden mit Carbonsäureanhydriden zugänglich ("Emulgatoren für Lebensmittel", Kapitel C 3 - 9, Springer-Verlag Berlin, Heidelberg, New York, Tokio (1985)). Sorbitanfettsäureester lassen sich ebenfalls in einfacher und an sich bekannter Weise durch Direktveresterung von Sorbitol mit gesättigten oder ungesättigten Fettsäuren mit vorzugsweise 12 bis 18 C-Atomen herstellen ("Emulgatoren für Lebensmittel", Seite 185, Springer-Verlag Berlin (1985)).

Fette, die nach dem erfindungsgemäßen Verfahren in freifließende Pulvermischungen überführt werden können, sind vorzügweise sprühgetrocknete Produkte, die aus gesättigten und/oder ungesättigten Fetten tierischen und/oder pflanzlichen Ursprungs, beispielsweise Fischfett, Palmkernfett, Kokosfett und/oder Sojafett, und Trägermaterialien, beispielsweise Milchproteinen, Stärke, Maltodextrinen, Mehl und Sojaproteinen zusammengesetzt sind. Diese Produkte werden häufig als Fettpulver bezeichnet.

Zum Verklumpen neigende, fetthaltige Lebensmittel, die erfindungsgemäß in Gegenwart von Magnesiumhydroxidcarbonat zu freifließenden Pulvermischungen vermischt und/oder vermahlen werden können, sind beispielsweise Fertigmehlmischungen, Suppenpulver und Soßenpulver.

Erfindungsgemäß werden Lebensmittelemulgatoren, Fettpulver oder fetthaltige Lebensmittel mit Magnesiumhydroxidcarbonat bei Temperaturen zwischen - 20 °C und 20 °C vermischt, über Fördereinrichtungen einer Mühle zugeführt, vermahlen und gegebenenfalls einem Nachmischprozeß unterworfen. Zur Verbesserung der Fließeigenschaften von pulverförmigen Fetten und/oder zum Verklumpen neigenden Lebensmitteln ist in vielen Fällen ein einfaches Vermischen mit Magnesiumhydroxidcarbonat ausreichend. In Pulvermischungen aus Lebensmittelemulgatoren und Magnesiumhydroxidcarbonat liegt der Gehalt an Magnesiumhydroxidcarbonat, bezogen auf die Gesamtmischung, vorzugsweise zwischen 5 und 50 Gew.-%, besonders bevorzugt zwischen 5 und 20 Gew.-%. Um freifließende magnesiumhaltige Pulvermischungen von Fetten oder von fetthaltigen Lebensmitteln zu erhalten, muß der Gehalt an Magnesiumhydroxidcarbonat, bezogen

3

auf die Gesamtmischung, vorzugsweise zwischen 1 und 20 Gew.-%, besonders bevorzugt zwischen 1 und 5 Gew.-% liegen.

Die nach dem erfindungsgemäßen Verfahren herstellbaren freifließenden pulverförmigen, magnesiumhydroxidcarbonathaltigen Emulgatoren und Fette lassen sich sehr leicht und gleichmäßig in Nahrungsmittelmassen, beispielsweise in Brotteigen und Kuchenmassen, verteilen.

## Beispiele

Es wurde ein Magnesiumhydroxidcarbonat mit folgender Spezifikation eingesetzt:
max. = maximal, min. = minimal
Magnesiumhydroxidcarbonat, leicht, chemisch rein, nach DAB 6 oder BP 68 oder USP XX oder FCCII

| | |
|---|---|
| Beschreibung: | weißes Pulver, geruchlos |
| Identität: | gibt die charakteristischen Reaktionen des Magnesiums und der Carbonate |
| Löslichkeit: | praktisch unlöslich in Wasser, löslich in verdünnten Säuren, |
| Wasserlösliches: | max. 1,0 % |
| Chlord (Cl): | max. 0,036 % |
| Sulfat ($SO_4$): | max. 0,8 % |
| Calcium (Ca): | max. 0,6 % |
| Eisen (Fe): | max. 0,06 % |
| Schwermetalle (als Pb): | max. 0,006 % |
| Gehalt: | min. 24,0 % Mg |
| Füllgewicht: | ca. 180 - 200 g/l |

## Beispiel 1

80 g Datem-Schuppe (Lamegin [R] DW 8000, Grünau: Fettbasis gehärteter Talg, Gesamt-Weinsäure 27 - 30 %, Festpunkt 43 - 46°C) wurden mit 20 g Magnesiumhydroxidcarbonat vermischt und anschließend in einer Technikums-Stiftmühle vermahlen und nachgemischt. Von der vermahlenen Mischung wurde das Schüttgewicht und die Feinheit bestimmt. Lagerversuche wurden bei 20 und 30 °C bei einem Druck von 1,9 t/m² durchgeführt.

In gleicher Weise wurde eine Mischung aus 80 g Datem-Schuppe (Lamegin [R] DW 8000) und 20 g Tricalciumphosphat hergestellt.

Tabelle 1

| Mahlprodukt aus | 80 Gew.-% Lamegin [R] DW 8000 und 20 Gew.-% Tricalciumphosphat | 80 Gew.-% Lamegin [R] DW 8000 und 20 Gew.-% Magnesiumhydroxidcarbonat |
|---|---|---|
| Anbacken und Schmieren in der Mühle | wenig | überhaupt keines |
| Feinheit der erhaltenen Pulver, durchgesiebter Anteil in % | | |
| 0,063 mm | 37 | 41 |
| 0,100 mm | 49 | 53 |
| 0,200 mm | 77 | 77 |
| 0,315 mm | 93 | 93 |
| 0,500 mm | 99 | 99 |
| 1,000 mm | 100 | 100 |
| Schüttgewicht g/l | 550 | 450 |
| Lagerverhalten: | | |
| 20 °C / Druck (1,9 t/m²) | klumpig, leicht zerdrückbare Klumpen | freifließend |
| 30 °C / Druck (1,9 t/m²) | stark klumpig, schwer zerdrückbare Klumpen | fast freifließend, leicht zerdrückbare Klumpen |

Beispiel 2

In einem Betriebsversuch zur Herstellung von pulverförmigem Datem wurde eine Mischung aus 80 Gew.-% Datem-Schuppe Lamegin [R] DW 8000 und 20 Gew.-% Magnesiumhydroxidcarbonat bei 20 °C vermischt, über ein Förderband einer Alpine-Stiftmühle zugeführt und in dieser vermahlen. In gleicher Weise wurde ein Pulvermischung aus 80 Gew.-% Datem-Schuppe Lamegin [R] DW 8000 und 20 Gew.-% Tricalciumphosphat hergestellt.

Beurteilt wurden dabei folgende Kriterien:
Stauben beim Einfüllen in den Mischer
Anbacken und Schmieren der Mühle
Förderverhalten (Bunker und Leitungen)
Abfüllverhalten (Maschine und Säcke)
Feinheit der erhaltenen Pulver
Schüttgewicht der erhaltenen Pulver
Lagerverhalten.

Tabelle 2

| Mahlprodukt aus | 80 Gew.-% Lamegin[R] DW 8000 20 Gew.-% Tricalciumphosphat (TCP) | 80 Gew.-% Lamegin[R] DW 8000 20 Gew.-% Magnesiumhydroxidcarbonat (MHC) |
|---|---|---|
| Stauben beim Einfüllen in die Mischer | gleich wie MHC | gleich wie TCP |
| Anbacken und Schmieren in der Mühle | mehr als bei MHC | weniger als bei TCP |
| Förderverhalten (Bunker, Leitungen) | schlechter als bei MHC | besser als bei TCP |
| Abfüllverhalten (Maschine + Säcke) | gleich wie MHC | gleich wie TCP |
| Feinheit der erhaltenen Pulver, durchgesiebter Anteil in % | | |
| 0,063 mm | 39 | 49 |
| 0,100 mm | 56 | 63 |
| 0,200 mm | 80 | 86 |
| 0,315 mm | 95 | 97 |
| 0,500 mm | 100 | 100 |
| 1,000 mm | 100 | 100 |
| Schüttgewicht g/l | 610 | 460 |

6

Lagerverhalten:

| 20 °C / Druck $(1,9 \text{ t/m}^2)$ | klumpig, leicht zer-drückbare Klumpen | freifließend |
| 30 °C / Druck $(1,9 \text{ t/m}^2)$ | stark klumpig, schwer zerdrückbare Klumpen | fast freifließend, leicht zerdrückbare Klumpen |

Beispiel 3

Analog Beispiel 2 wurde eine Pulvermischung aus 90 g Monomuls [R] 90 - 25, Grünau (Monoglycerid ,Gesamtmonogehalt ca. 95 Gew.-%, Basis gehärteter Rindertalg) und 10 g Magnesiumhydroxidcarbonat sowie eine Pulvermischung aus 90 g Monomuls [R] 90 - 25, Grünau (Monoglycerid, Gesamtmonogehalt ca. 95 Gew.-%, Basis gehärteter Rindertalg) und 10 g Tricalciumphosphat hergestellt. Von den Pulvermischungen wurde das Schüttgewicht und die Feinheit bestimmt. Lagerversuche wurden bei 20 und 30 °C bei einem Druck von 1,9 t/m² durchgeführt.

Tabelle 3

| Mahlprodukt aus | 90 Gew.-% Monomuls [R] 90 - 25 10 Gew.-% TCP | 90 Gew.-% Monomuls [R] 90 - 25 10 Gew.-% MHC |
|---|---|---|
| Anbacken und Schmieren in der Mühle | mittel - stark | wenig - gar nicht |
| Feinheit der erhaltenen Pulver, durchgesiebter Anteil in % | | |
| 0,063 mm | 19 | 25 |
| 0,100 mm | 40 | 48 |
| 0,200 mm | 92 | 94 |
| 0,315 mm | 100 | 100 |
| 0,500 mm | 100 | 100 |
| 1,000 mm | 100 | 100 |
| Schüttgewicht g/l | 540 | 480 |
| Lagerverhalten: | | |
| 20 °C / Druck (1,9 t/m²) | fast freifließend, drückbare Klumpen Agglomerate | freifließend |
| 30 °C / Druck (1,9 t/m²) | fast freifließend, zerdrückbare Agglomerate | freifließend |

Beispiel 4

98 g eines zum Verklumpen neigenden Fettpulvers (Cegepal [R] AF, Grünau: 80 Gew.-% Fischfett, Schmelzpunkt 34 - 36 °C und 20 Gew.-% Magermilchpulver) und 2 g Magnesiumhydroxidcarbonat sowie 98 g eines zum Verklumpen neigenden Fettpulvers (Cegepal [R] AF) und 2 g Tricalciumphosphat wurden durch intensives Mischen in Pulvermischungen überführt.

Nach 14 tägiger Lagerung bei Raumtemperatur war die mit Magnesiumhydroxidcarbonat hergestellte Fettpulvermischung im Schüttverhalten freifließender als die tricalciumphosphathaltige.

**Ansprüche**

1. Verfahren zur Verbesserung des Fließverhaltens von zum Verklumpen neigenden Pulvermischungen enthaltend Lebensmittelemulgatoren auf Basis von Fettderivaten, Fette oder fetthaltige Lebensmittel, dadurch gekennzeichnet, daß diese mit Magnesiumhydroxidcarbonat vermischt und/oder vermahlen werden.

2. Verfahren nach Anspruch 1, dadurch gekennzeichnet, daß Lebensmittelemulgatoren auf Basis von Fettderivaten mit 5 bis 50 Gew.-%, vorzugsweise mit 5 bis 20 Gew.-%, bezogen auf die Gesamtmischung, an Magnesiumhydroxidcarbonat vermischt und vermahlen werden.

3. Verfahren nach Anspruch 1, dadurch gekennzeichnet, daß Fettpulver oder fetthaltige Lebensmittel mit 1 bis 20 Gew.-%, vorzugsweise mit 1 bis 5 Gew.-%, bezogen auf die Gesamtmischung, an Magnesiumhydroxidcarbonat vermischt oder vermischt und vermahlen werden.

4. Verwendung von Magnesiumhydroxidcarbonat zur Verbesserung des Fließverhaltens von zum Verklumpen neigenden Pulvermischungen enthaltend Lebensmittelemulgatoren auf Basis von Fettderivaten, Fette oder fetthaltige Lebensmittel.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,X | DERWENT abstract no. C78-07707A, 1978; H. OGAWA: "Lecithin powder prodn. - by dissolving raw lecithin in acetic acid and adding alkali cpd. to the soln."; & JP - A - 77050260 --- | 1 | A 23 L 1/035 A 23 L 1/314 |
| D,A | DE-A-3 212 057 (HENKEL KGAA) * Ansprüche 1-6 * --- | 1 | |
| D,A | CHEMICAL ABSTRACTS Band 93, 8.-22. September 1980, Seite 152, Zusammenfassung Nr. 97810v, Columbus, Ohio, USA; E. COSMIN et al.: "Noncaking sodium chloride" --- | 1 | |
| A | JOURNAL OF FOOD SCIENCE Band 50, Nr. 4, July/August 1985, Seiten 1014-1016, Chicago, Illinois, USA; C. L. KNIPE et al.: "Effects of Magnesium Chloride Combined with Tetrasodium Pyrophosphate on Meat Emulsion Characteristics" ----- | 1 | RECHERCHIERTE SACHGEBIETE (Int. Cl.4) A 23 L 1/00 |

Der vorliegende Recherchenbericht wurde für alle Patentansprüche erstellt

| Recherchenort | Abschlußdatum der Recherche | Prüfer |
|---|---|---|
| BERLIN | 29-08-1989 | SCHULTZE D |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
............................................................
& : Mitglied der gleichen Patentfamilie, übereinstimmendes Dokument

EPO FORM 1503 03.82 (P0403)